# EUROPÄISCHE PATENTANMELDUNG

(11) **EP 1 621 453 A2**
(43) Veröffentlichungstag der Anmeldung: **01.02.2006**
(21) Anmeldenummer: 05013825.4
(22) Anmeldetag: 27.06.2005
(51) Int. Cl.: B62D 65/00

(54) **Fahrzeugkarosserie mit Einzelteilen aus variabler Blechdicke**

(30) Priorität: 30.07.2004 DE 102004037206
(71) Anmelder: Muhr und Bender KG, 57439 Attendorn (DE)
(72) Erfinder: Hauger, Andreas, Dr.-Ing., 57439 Attendorn (DE); Muhr, Thomas, Dr.-Ing., 57439 Attendorn (DE)
(74) Vertreter: Neumann, Ernst Dieter

(57) **Zusammenfassung**

Karosserie für ein Kraftfahrzeug, die aus Einzelelementen, insbesondere aus Hohlprofilen und Flächenelementen aus Blech gefügt ist, wobei zumindest zum Teil Einzelelemente aus flexibel gewalztem Blech mit längs einer Richtung variabler Blechdicke eingesetzt sind, bei denen die Verteilungsbreite der spezifischen Belastung über dem Einzelelement durch die Wahl der Blechdickenverteilung reduziert oder minimiert ist.

## Beschreibung

Die Erfindung betrifft eine Karosserie für ein Kraftfahrzeug, das aus Einzelelementen, insbesondere aus Hohlprofilen und Flächenelementen aus Blech gefügt ist sowie Verfahren zur Auslegung einer solchen Karosserie. Unter Karosserie wird hierin die Rohkarosserie verstanden, Hauben und Türen können einbegriffen sein.

Es ist bereits bekannt, Fahrzeugkarosserien aus Einzelelementen mit untereinander abweichender Blechdicke herzustellen. Darüber hinaus sind auch bereits Blechelemente in Fahrzeugen eingesetzt worden, die variable Blechdicke aufweisen, um im Falle eines Unfalls ein bestimmtes zeitliches und/oder räumliches Verformungsverhalten zu zeigen.

Unter dem Gesichtspunkt der Karosseriefestigkeit bei gegebenem Materialeinsatz, insbesondere der Verwindungssteife, gehen ständige Bemühungen dahin, die Fahrzeugstruktur, d. h. die Formgebung der Karosserie, zu verbessern.

Der vorliegenden Erfindung liegt die Aufgabe zugrunde, einen neuen Ansatz zur Optimierung des Materialeinsatzes an Fahrzeugkarosserien bereitzustellen. Eine erste Lösung hierfür besteht darin, daß zumindest zum Teil Einzelelemente aus flexibel gewalztem Blech mit längs einer Achse, insbesondere in Richtung ihrer Längserstreckung, variabler Blechdicke eingesetzt sind, bei denen das Spektrum (die Verteilungsbreite) der spezifischen Belastung über dem Einzelelement im Fahreinsatz bei elastischer Verformung durch die Wahl der Blechdickenverteilung reduziert oder minimiert ist. Dies bedeutet, Teile eines Blechelements, die bei Ausbildung mit konstanter Blechdicke spezifisch geringer belastet wären, werden mit innerhalb des Blechelements geringerer Blechdicke ausgeführt. Hiermit kann der Materialeinsatz reduziert werden, ohne daß die Karosseriefestigkeit wesentlich beeinträchtigt wird, da die Festigkeitsgrenzen weiterhin eingehalten werden. Die genannte geringere Blechdicke wird im Wege des flexiblen Walzens mit längs einer Achse variabler Blechdicke dargestellt.

Hierbei ist insbesondere vorgesehen, daß die Wahl der Blechdickenverteilung an die Belastung im Fahreinsatz angepaßt ist, bei der es ausschließlich zu elastischer Verformung kommen darf.

Eine zweite Lösung besteht darin, daß zumindest zum Teil Einzelelemente aus flexibel gewalztem Blech mit längs einer Achse, insbesondere in Richtung ihrer Längserstreckung, variabler Blechdicke eingesetzt sind, bei denen das Spektrum (die Verteilungsbreite) der spezifischen Belastung im Crashfall bei plastischer Verformung über dem Einzelelement durch die Wahl der Blechdickenverteilung erhöht oder maximiert ist.

Hiermit wird erreicht, daß für bestimmte Einzelelemente die Wahl der Blechdickenverteilung an die Belastung im Crashfall angepaßt ist, bei der eine optimierte plastische Verformung erfolgen soll. Hierbei findet die Verformung gezielt und vorherbestimmt in den Bereichen reduzierter bzw. minimierter Blechdicke statt. Dies gilt insbesondere für die Einzelelemente, die in der Hauptsache Energie im Crashfall aufnehmen sollen.

Jede Karosserie bzw. jedes Karosseriebauteil ist entsprechend seiner Belastung gewichtsoptimiert auszulegen. Bisher bestimmt die lokale maximale Belastung die minimale Blechstärke der Einzelelemente der aufzubauenden Struktur. Hierbei werden zum einen beispielsweise Tailor Welded Blanks verwendet, um in der Struktur Einzelelemente aus Blechen mit unterschiedlichen Blechdicken und gegebenenfalls auch unterschiedlichen Werkstoffen, die durch eine Schweißnaht miteinander zu verbinden sind, einsetzen zu können. Zum anderen werden lokale Verstärkungsbleche oder Knotenbleche an Einzelelementen eingesetzt, um zu einer Strukturoptimierung beizutragen. Dies kann gemäß der Erfindung durch die Verwendung einstückiger Einzelelemente aus flexibel gewalzten Blechen bzw. daraus hergestellten Profilen oder Rohren ersetzt werden. Während bei Tailor Welded Blanks und der Verwendung von Verstärkungsblechen Dickensprünge auftreten, lassen sich nach der Erfindung belastungsoptimierte fließende Dickenübergänge bei gleichzeitiger Meidung einer schwächenden Schweißnaht darstellen. Die Anzahl der Fügestellen, die in der Struktur notwendig sind, kann reduziert werden.

Gemäß der Erfindung können durch flexibles Walzen belastungsoptimierte Wandstärken so hergestellt werden, daß sie durch eine fließende, harmonische Dickenänderung charakterisiert sind. Dieser harmonische, für das Einzelbauteil bezeichnende Blechdickenverlauf ist durch den spezifischen Belastungsfall definiert. Dieser Belastungsfall ist jedoch keine örtliche Größe, bezogen auf das einzelne Bauteil, sondern der Lastfall des einzelnen Bauteils wird definiert durch die Belastung der gesamten Karosseriestruktur. Das bedeutet, daß bei der Blechdickenoptimierung des Einzelbauteils immer das Verhalten der Gesamtstruktur berücksichtigt werden muß. Daher ist ein Optimierungswerkzeug erforderlich, welches die Belastungsoptimierung des Einzelbauteils unter Berücksichtigung der Gesamtstruktur durchführt. Optimierungskriterien für die belastungsspezifische Auslegung können hierbei zum einen gleiche funktionale Bauteileigenschaften bei geringerem Gewicht oder bessere Funktionseigenschaften bei gleichem Gewicht und zum anderen optimales Crashverhalten bei geringerem Gewicht bzw. verbessertes Crashverhalten bei gleichem Gewicht sein.

Die gewichts- und steifigkeitsoptimierte Karosseriestruktur durch die Verwendung von fließenden Blechdickenänderungen ist dadurch zu ermitteln, daß die Blechdikkenänderungen durch einen Optimierungsalgorithmus berechnet werden, der die Funktion bzw. die Belastung des Einzelbauteils immer unter Berücksichtigung der Gesarntkarosseriestruktur optimiert.

In Ausgestaltung der Erfindung wird vorgeschlagen, daß konkret zumindest eines der folgenden Einzelelemente aus flexibel gewalztem Blech besteht, das an die Belastung im Fahreinsatz angepaßt ist:
- Querträger Hinterachse
- Querträger Vorderachse
- Querträger Stirnwand
- Dachquerträger
- Verstärkung Motorhaube
- Sitzquerträger vorne / hinten
- Querträger Fondsitz
- Cockpit-Querträger

Hierbei sind insbesondere die axialen Enden und/oder besondere Anbindungsbereiche gegenüber den übrigen Bereichen mit größerer Materialdicke ausgebildet.

Weiterhin kann konkret vorgesehen werden, daß zumindest eines der folgenden Einzelelemente aus flexibel gewalztem Blech besteht, das an die Belastung im Crashfall angepaßt ist:
- Längsträger vorne /hinten
- Stoßfänger (Bumper)
- Türschweller
- B-Säule
- Türaufprallträger
- Verstärkung Getriebetunnel
- Verstärkung Tunnel
- Schließteil B-Säule
- Dachrahmen vorne / hinten

Hierbei ist insbesondere ein mehrfacher Wechsel von Bereichen größerer Materialdicke und geringerer Materialdicke über dem Längsverlauf vorgesehen.

In weiterer Konkretisierung wird vorgeschlagen, daß zumindest die folgenden aneinander anschließenden Einzelelemente in Kombination aus flexibel gewalztem Blech bestehen:
- Längsträger I und Längsträger II
- Längsträger und Schließteil
- Querträger und Schließteil
- B-Säule und Schließteil.

Schließlich wird vorgeschlagen, daß zumindest die folgenden Einzelelemente in Kombination aus flexibel gewalztem Blech und aus geschweißten Blechen verschiedener Dicke (taylor welded blanks) bestehen:
- Türinnenblech
- Seitenrahmen
- Bodenblech vorne
- Bodenblech hinten
- Querträger Stirnwand
- Türaußenblech.

Die Einzelelemente können durch Schweißen und/oder Clinchen und/oder Kleben miteinander gefügt sein.

Nach einem weiteren Aspekt der Erfindung wird ein Verfahren zur Auslegung einer Kraftfahrzeugkarosserie vorgeschlagen, die aus Einzelelementen, insbesondere aus Hohlprofilen und Flächenelementen aus Blech gefügt ist, das sich dadurch auszeichnet, daß eine Festigkeitsberechnung auf der Grundlage von Einzelelementen aus Blech mit konstanter Blechdicke ausgeführt wird und daß das Spektrum (die Verteilungsbreite) der spezifischen Belastung zumindest von einzelnen Einzelelementen im Fahrbereich unter elastischer Verformung durch den Einsatz von flexibel gewalztem Blech mit variabler Blechdicke reduziert oder minimiert wird.

Nach einem anderen Aspekt der Erfindung wird ein Verfahren zur Auslegung einer Kraftfahrzeugskarosserie, die aus Einzelelementen, insbesondere aus Hohlprofilen und Flächenelementen aus Blech gefügt ist, vorgeschlagen, bei dem eine Festigkeitsberechnung auf der Grundlage von Einzelelementen aus Blech mit konstanter Blechdicke ausgeführt wird und die Verteilungsbreite der spezifischen Belastung zumindest von einzelnen Einzelelementen zur Aufnahme von Energie im Crashfall unter plastischer Verformung durch den Einsatz von flexibel gewalztem Blech mit längs einer Richtung variabler Blechdicke erhöht oder maximiert wird.

Hierbei wird insbesondere in beiden vorgenannten Fällen vorgeschlagen, daß die Festigkeitsberechnung iterativ durchgeführt wird und unter Wahrung der Darstellbarkeitsgrenzen von flexibel gewalztem Blech mit variabler Blechdicke und unter Wahrung der Materialfestigkeitsgrenzen optimiert wird. Bei der Auslegung ist zu berücksichtigen, daß die spezifische Belastung auf Biegung innerhalb eines Einzelelementes aus flexibel gewalztem Blech innerhalb eines Spektrums (einer Verteilungsbreite) von ± 10% liegt. Weiterhin ist zu berücksichtigen, daß die spezifische Belastung auf Zug/Druck innerhalb eines Einzelelementes aus flexibel gewalztem Blech innerhalb eines Spektrums (einer Verteilungsbreite) von ± 20% liegt.

Bevorzugte Ausführungsbeispiele der Erfindung sind in den Zeichnungen dargestellt und werden nachstehend beschrieben.
Figur 1 zeigt Einzelteile einer Fahrzeugkarosserie in Explosionsdarstellung;
Figur 2 zeigt den Blechdickenverlauf einer B-Säule;
Figur 3 zeigt den Blechdickenverlauf eines Längsträgers;
Figur 4 zeigt den Blechdickenverlauf eines hinteren Querträgers;
Figur 5 zeigt den Blechdickenverlauf eines vorderen Querträgers;
Figur 6 zeigt den Blechdickenverlauf eines Türaufprallträgers;
Figur 7 zeigt den Blechdickenverlauf einer Scharnierverstärkung.

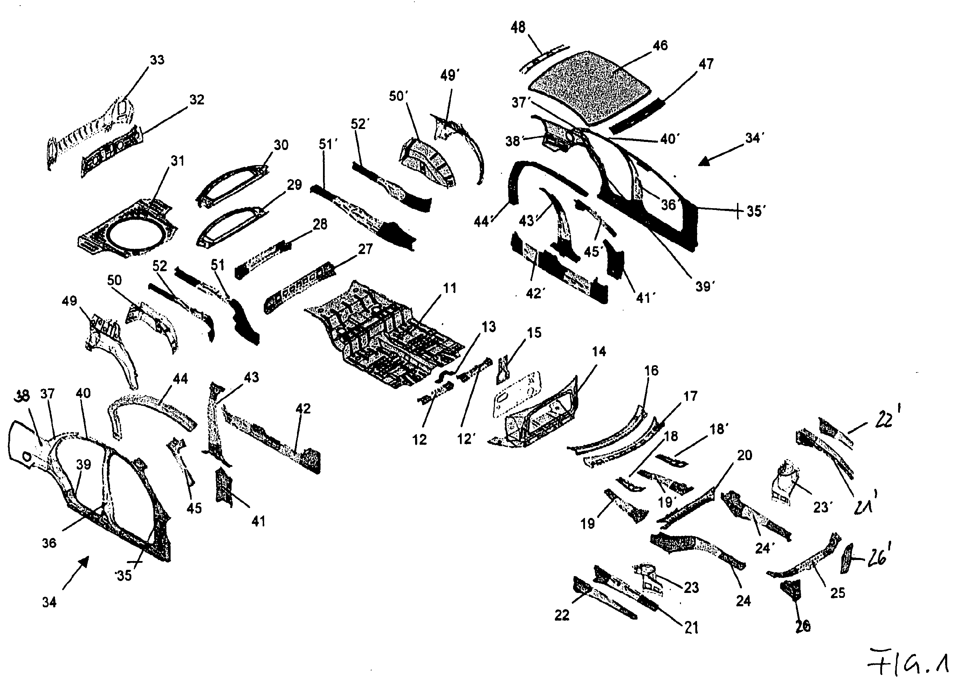

In Figur 1 sind die wesentlichen Teile einer Fahrzeugrohkarosserie in Explosionsdarstellung gezeigt, wobei links oben die Teile des Fahrzeughecks und rechts unten die Teile der Fahrzeugfront angeordnet sind. Größere Blechdicken sind mit dunklerer Einfärbung, geringere Blechdicken mit hellerer Einfärbung gekennzeichnet. Hierbei sind Teile, deren Blechdicke veränderlich ist, die somit Einfärbungen unterschiedlicher Helligkeit aufweisen, aus flexibel gewalztem Blech einstückig hergestellt.

Ein Bodenblech 11 ist aus Blech konstanter Dicke hergestellt, das in der Darstellung einheitlich eingefärbt ist. Gleichfalls gilt dies für eine Tunnelbrücke 13. Auf das Bodenblech aufzusetzende Sitz-Querträger 12, 12' sind aus flexibel gewalztem Blech hergestellt, das jeweils an den Enden größere Dicke aufweist. Nach vorne schließt sich an das Bodenblech 11 eine Stirnwand 14 mit einer mittigen Verstärkung 15 an, die jeweils aus Blech konstanter Dicke bestehen. An den Kanten der Stirnwand schließen sich ein oberer Querträger 16 und ein unterer Querträger 17 an. Auch diese bestehen aus Blech konstanter Dicke. Weiterhin schließen an der Stirnwand Längsträger II 19, 19' mit ihren Schließteilen 18, 18' an, die jeweils an ihren Enden größere Dicke aufweisen als im Mittelbereich. Diese werden über einen vorderen Querträger 20 miteinander verbunden. Obere Längsträger 21, 21' mit ihren Schließteilen 22, 22' weisen jeweils an ihren Enden größere Dicke auf, als im Mittelbereich. Mit diesen sind Aufnahmen für Federbeindome 23, 23' verbunden. Längsträger I 24, 24' bestehen aus flexibel gewalztem Material und weisen jeweils an ihren Enden größere Dicke auf als im Mittelbereich. Ein vorderer Querträger 25 für die Schloßaufnahme verbindet die vorderen freien Enden der oberen Längsträger. Mit diesen wiederum sind vordere Schließbleche 26, 26' verbunden. Auch dieser Querträger 25 für die Schloßaufnahme weist an seinen Enden größere Dicke auf als im Mittelbereich. Im hinteren Bereich des Bodenblechs 11 wird ein Querträger 27 unter den Fondsitzen aufgesetzt, weiterhin ein Querträger 28 für die Hinterachsaufnahme. Beide weisen jeweils an ihren Enden größere Dicke auf als im Mittelbereich. Weiterhin sind erkennbar ein unterer Hutablagerahmen 29 und ein oberer Hutablagerahmen 30, jeweils aus Blech konstanter Blechdicke. Diese werden mit später noch zu benennenden Seitenteilen verbunden. Unmittelbar an das Bodenblech 11 wird ein Kofferraumbodenblech 31 angesetzt. Dieses wiederum trägt ein inneres Kofferraumabschlußblech 32 und eine Heckschürze 33, jeweils aus Blech konstanter Dicke. An das Bodenblech 11 werden weiterhin Seitenrahmenteile 34, 34' angesetzt, die aus flexibel gewalztem Blech bestehen, wobei im einzelnen noch die A-Säulen 35, 35', die B-Säulen 36, 36', die C-Säulen 37, 37' sowie die hinteren Kotflügel 38, 38' unterschieden sind. Zwischen A- und C-Säule liegen die Türschweller 39, 39' und die oberen Türrahmen 40, 40'. Wie erkennbar, sind die B-Säulen in ihrem mittleren Bereich aus dünnerem Material und jeweils in den Anbindungsbereichen an den Türschwellern 39, 39' und an den oberen Türrahmen 40, 40' aus dickerem Material. Die Türschweller 39, 39' haben in Längsrichtung betrachtet jeweils Endbereiche größerer Dicke und einen Bereich geringerer Materialdicke im Bereich der Anbindung der B-Säulen und der C-Säulen.

Gegen die Seitenrahmenteile 34, 34' werden von innen jeweils ein unteres Schließteil für die A-Säule 41, 41' und ein oberes Schließteil für die A-Säule 45, 45', ein Türschwellerblech 42, 42', ein Schließteil für die B-Säule 43, 43' und ein Dachrahmenprofil 44, 44' gesetzt. Auch hierbei sind unterschiedliche Blechdicken zu erkennen, und zwar an den Blechen 42, 42' jeweils Verstärkungen vorne und hinten sowie in der Mitte, an den Blechen 43, 43' und 45, 45' jeweils Verstärkungen an ihren beiden Enden und an den Blechen 44, 44' jeweils Verstärkungen an den Anschlußstellen. Es ist weiterhin ein Dachblech 46 aus im wesentlichen gleichbleibend dickem Blech sowie vordere und hintere Dachquerträger 47, 48 gezeigt, die jeweils aus Blech konstanter Dicke bestehen. Weiterhin sind Paare von Kotflügeleinsätzen 49, 49', 50, 50' gezeigt, die ebenfalls weitgehend aus Blech konstanter Dicke bestehen. Am Bodenblech 11 angesetzt werden weiterhin hintere Längsträger 51, 51' mit Schließteilen 52, 52', die aus flexibel gewalztem Blech bestehen. Hierbei sind jeweils an den Enden in Längsrichtung größere Blechdicken als im mittleren Bereich ausgebildet.

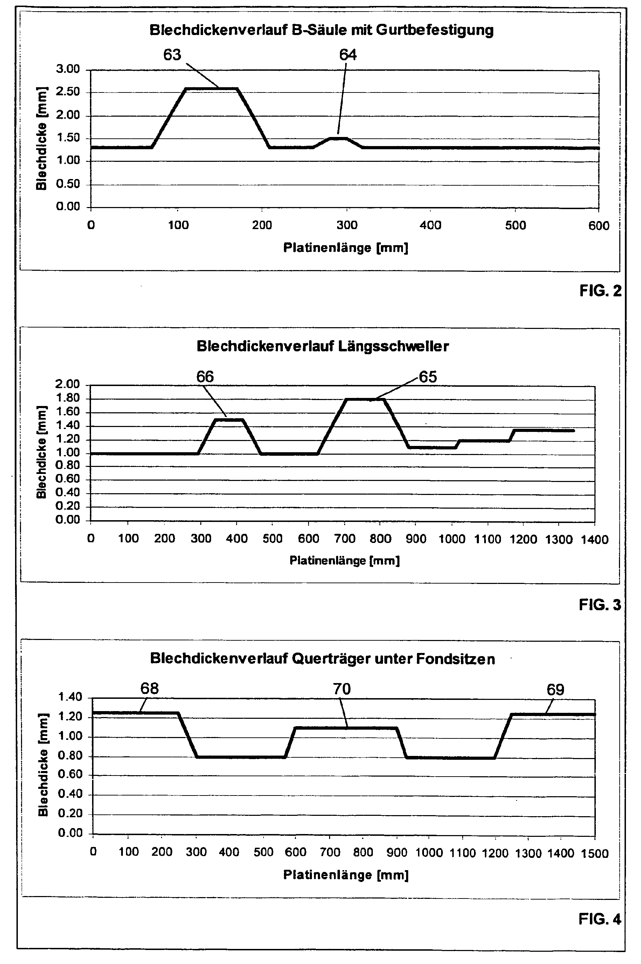

In Figur 2 ist ein Blechdickenverlauf über der Längserstreckung für eine B-Säule dargestellt. Hierbei sind Blechdickenverstärkungen 63 für eine Gurtrollerbefestigung und 64 für eine Gurtumlenkungsbefestigung gegenüber einem im übrigen konstanten Blechdickenverlauf dargestellt. Während die geringste Blechdicke etwa 1,3 mm beträgt, ist die Blechdicke im Bereich der größeren Verstärkung 63 bei etwa 2,6 mm und im Bereich der kleineren Verstärkung 64 bei etwa 1,5 mm. Dies gilt bei einer Gesamtlängserstreckung von ca. 600 mm.

In Figur 3 ist der Blechdickenverlauf für einen Längsschweller gezeigt. Hierbei sind eine Blechdickenverstärkung 65 im Bereich der A-Säulen-Anbindung und eine Blechdickenverstärkung 66 im Bereich der B-Säulen-Anbindung erkennbar. Nach vorne über die A-Säulen-Anbindung hinaus nimmt die Blechdicke zweifach gestuft geringfügig zu. Hierbei liegt die geringste Blechdicke bei etwa 1,0 mm während die größte Blechdicke bei etwa 1,8 mm liegt. Dies gilt bei einer Gesamtlängserstreckung von ca. 1.350 mm.

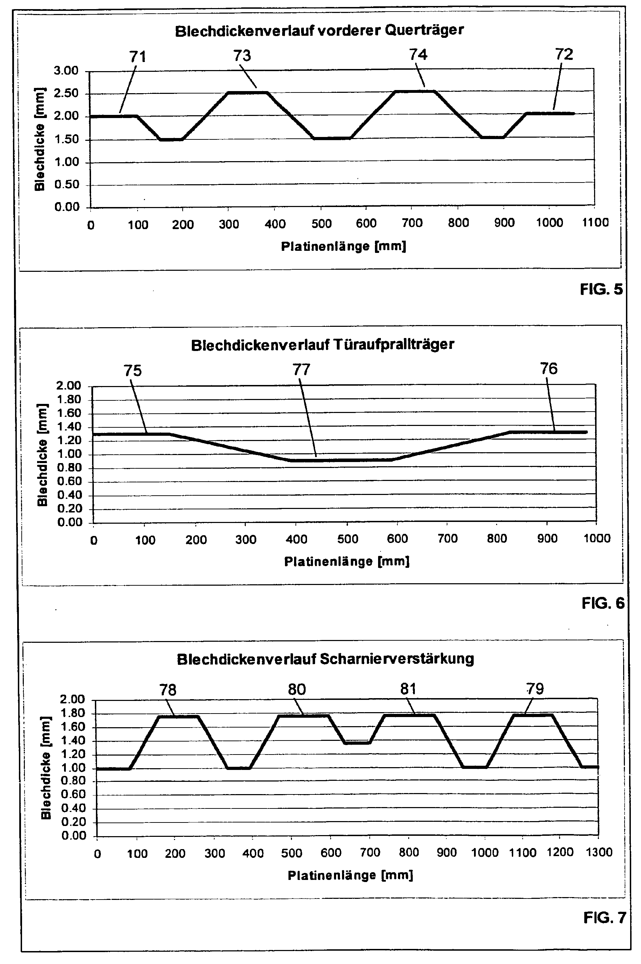

In Figur 4 ist der Blechdickenverlauf für einen Querträger unter den Fondsitzen dargestellt. Hierbei ist eine Blechdickenverstärkung 70 in der Mitte und weitere Blechdickenverstärkungen 68, 69 für Anbindungspunkte an den äußeren Enden vorgesehen. Die geringste Blechdicke beträgt hierbei 0,8 mm, während die größten Blechdicken 1,25 mm betragen. Dies gilt bei einer Gesamtlänge von ca. 1.500 mm.

In Figur 5 ist der Blechdickenverlauf für einen vorderen Querträger gezeigt. Hierbei sind geringere Blechdickenverstärkungen 71, 72 an den äußeren Enden für Anbindungspunkte und zwei symmetrisch angeordnete Blechdickenverstärkungen 73, 74 im dazwischenliegenden Bereich erkennbar. Die geringste Blechdicke beträgt hierbei etwa 1,5 mm, die größte Blechdicke beträgt etwa 2,5 mm. Die Gesamtlängserstrekkung beträgt ca. 1050 mm.

In Figur 6 ist der Blechdickenverlauf für einen Türaufprallträger gezeigt, der in Fahrzeuglängsrichtung verlaufend in eine Fahrzeugtür einzusetzen ist. Hierbei sind Blechdickenverstärkungen 75, 76 an den beiden Enden vorgesehen, während im mittleren Bereich demgegenüber eine Blechdickenreduzierung 77 vorliegt. Hierbei ist die geringste Blechdicke etwa 0,8 mm, während die größte Blechdicke etwa 1,3 mm beträgt. Die Übergangslängen betragen jeweils über 200 mm bei einer Gesamtlänge von ca. 1.000 mm.

In Figur 7 ist der Blechdickenverlauf für eine Scharnierverstärkung dargestellt, die an A-Säulen oder B-Säulen angesetzt werden kann. Hierbei sind sich über große Längsbereiche erstreckende fließende Dickenübergänge ausgebildet. Hierbei sind bei symmetrischem Verlauf über der Länge zwei äußere Blechdickenverstärkungen 78, 79 und zwei mittlere Blechdickenverstärkungen 80, 81 erkennbar. Die geringste Blechdicke beträgt hierbei 1,0 mm, während die größte Blechdicke etwa 1,75 mm beträgt. Dies gilt bei einer Gesamtlänge von ca. 1.300 mm.

### Bezugszeichenliste

- 11: Bodenblech
- 12, 12': Sitz-Querträger
- 13: Tunnelbrücke
- 14: Stirnwand
- 15: Verstärkungsblech
- 16: Querträger Stirnwand oben
- 17: Querträger Stirnwand unten
- 18, 18': Schließteil Längsträger II
- 19, 19': Längsträger II
- 20: vorderer Querträger
- 21, 21': Längsträger oben
- 22, 22': Schließteil Längsträger oben
- 23, 23': Aufnahme Federbeindom
- 24, 24': Längsträger I
- 25: Querträger Schloßaufnahme
- 26, 26': Schließteil vorne
- 27: Querträger unter Fondsitz
- 28: Querträger Hinterachsaufnahme
- 29: unterer Hutablagerahmen
- 30: oberer Hubablagerahmen
- 31: Kofferraumbodenblech
- 32: inneres Kofferraumabschlußblech
- 33: Heckschürze
- 34, 34': Seitenrahmenteil
- 35, 35': A-Säule
- 36, 36': B-Säule
- 37, 37': C-Säule
- 38, 38': hinterer Kotflügel
- 39, 39': Türschweller
- 40, 40': oberer Türrahmen
- 41, 41': Schließteil A-Säule unten
- 42, 42': Türschwellerblech
- 43, 43': B-Säulenblech
- 44, 44': Dachrahmenprofil
- 45, 45': Schließteil A-Säule oben
- 46: Dachblech
- 47: vorderer Dachquerträger
- 48: hinterer Dachquerträger
- 49, 49': Kotflügeleinsatz
- 50, 50': Kotflügeleinsatz
- 51, 51': hinteres Längsträgerblech
- 52, 52': Schließteil hinterer Längsträger
- 63: Blechdickenverstärkung
- 64: Blechdickenverstärkung
- 65: Blechdickenverstärkung
- 66: Blechdickenverstärkung
- 68: Blechdickenverstärkung
- 69: Blechdickenverstärkung
- 70: Blechdickenverstärkung
- 71: Blechdickenverstärkung
- 72: Blechdickenverstärkung
- 73: Blechdickenverstärkung
- 74: Blechdickenverstärkung
- 75: Blechdickenverstärkung
- 76: Blechdickenverstärkung
- 77: Blechdickenreduzierung
- 78: Blechdickenverstärkung
- 79: Blechdickenverstärkung
- 80: Blechdickenverstärkung
- 81: Blechdickenverstärkung

## Patentansprüche

1. Karosserie für ein Kraftfahrzeug, die aus Einzelelementen, insbesondere aus Hohlprofilen und Flächenelementen aus Blech gefügt ist,
**dadurch gekennzeichnet,**
**daß** zumindest zum Teil Einzelelemente aus flexibel gewalztem Blech mit längs einer Richtung variabler Blechdicke eingesetzt sind, bei denen die Verteilungsbreite der spezifischen Belastung über dem Einzelelement durch die Wahl der Blechdickenverteilung reduziert oder minimiert ist.

2. Karosserie nach Anspruch 1,
**dadurch gekennzeichnet,**
**daß** die Wahl der Blechdickenverteilung an die Belastung im Fahreinsatz bei elastischer Verformung angepaßt ist.

3. Karosserie für ein Kraftfahrzeug, die aus Einzelelementen, insbesondere aus Hohlprofilen und Flächenelementen aus Blech gefügt ist,
**dadurch gekennzeichnet,**
**daß** zumindest zum Teil Einzelelemente aus flexibel gewalztem Blech mit längs einer Richtung variabler Blechdicke eingesetzt sind, bei denen die Verteilungsbreite der spezifischen Belastung über dem Einzelelement durch die Wahl der Blechdickenverteilung erhöht oder maximiert ist.

4. Karosserie nach Anspruch 3,
**dadurch gekennzeichnet,**
**daß** die Wahl der Blechdickenverteilung an die Belastung im Crashfall unter plastischer Verformung angepaßt ist.

5. Karosserie nach einem der Ansprüche 1 oder 2,
**dadurch gekennzeichnet,**
**daß** zumindest eines der folgenden Einzelelemente aus flexibel gewalztem Blech besteht, das an die Belastung unter elastischer Verformung im Fahreinsatz angepaßt ist:
- Querträger Hinterachse
- Querträger Vorderachse
- Querträger Stirnwand
- Dachquerträger
- Verstärkung Motorhaube
- Sitzquerträger vorne / hinten
- Querträger Fondsitz
- Cockpit-Querträger

6. Karosserie nach einem der Ansprüche 3 oder 4,
**dadurch gekennzeichnet,**
**daß** zumindest eines der folgenden Einzelelemente aus flexibel gewalztem Blech besteht, das an die Belastung bei plastischer Verformung im Crashfall angepaßt ist:
- Längsträger vorne /hinten
- Stoßfänger (Bumper)
- Türschweller
- B-Säule
- Türaufprallträger
- Verstärkung Getriebetunnel
- Verstärkung Tunnel
- Schließteil B-Säule
- Dachrahmen vorne / hinten

7. Karosserie nach einem der Ansprüche 1 bis 6,
**dadurch gekennzeichnet,**
**daß** die Einzelelemente durch Schweißen und/oder Clinchen und/oder Kleben miteinander gefügt sind.

8. Karosserie nach einem der Ansprüche 1 bis 7,
**dadurch gekennzeichnet,**
**daß** zumindest die jeweils zwei der folgenden Einzelelemente in Kombination aus flexibel gewalztem Blech bestehen:
- Längsträger I und Längsträger II
- Längsträger und Schließteil
- Querträger und Schließteil
- B-Säule und Schließteil

9. Karosserie nach einem der Ansprüche 1 bis 7,
**dadurch gekennzeichnet,**
**daß** zumindest die folgenden Einzelelemente in Kombination aus flexibel gewalztem Blech oder aus geschweißten Blechen verschiedener Dicke (taylor welded blanks) bestehen:
- Türinnenblech
- Seitenrahmen
- Bodenblech vorne
- Bodenblech hinten
- Querträger Stirnwand
- Türaußenblech.

10. Verfahren zur Auslegung einer Kraftfahrzeugskarosserie, die aus Einzelelementen, insbesondere aus Hohlprofilen und Flächenelementen aus Blech gefügt ist,
**dadurch gekennzeichnet,**
**daß** eine Festigkeitsberechnung auf der Grundlage von Einzelelementen aus Blech mit konstanter Blechdicke ausgeführt wird und daß die Verteilungsbreite der spezifischen Belastung zumindest von einzelnen Einzelelementen (11) im Fahreinsatz unter elastischer Verformung durch den Einsatz von flexibel gewalztem Blech mit längs einer Richtung variabler Blechdicke (11) reduziert oder minimiert wird.

11. Verfahren zur Auslegung einer Kraftfahrzeugskarosserie, die aus Einzelelementen, insbesondere aus Hohlprofilen und Flächenelementen aus Blech gefügt ist,
**dadurch gekennzeichnet,**
**daß** eine Festigkeitsberechnung auf der Grundlage von Einzelelementen aus Blech mit konstanter Blechdicke ausgeführt wird und daß die Verteilungsbreite der spezifischen Belastung zumindest von einzelnen Einzelelementen (11) zur Aufnahme von Energie im Crashfall unter plastischer Verformung durch den Einsatz von flexibel gewalztem Blech mit längs einer Richtung variabler Blechdicke (11) erhöht oder maximiert wird.

12. Verfahren nach einem der Ansprüche 10 oder 11,
**dadurch gekennzeichnet,**
**daß** die Festigkeitsberechnung iterativ durchgeführt wird und unter Wahrung der Darstellbarkeitsgrenzen von flexibel gewalztem Blech mit variabler Blechdicke und unter Wahrung der Materialfestigkeitsgrenzen optimiert wird.

13. Verfahren nach einem der Ansprüche 10 oder 12,
**dadurch gekennzeichnet,**
**daß** die spezifische Belastung auf Biegung innerhalb eines Einzelelementes aus flexibel gewalztem Blech innerhalb einer Verteilungsbreite von ± 10 % liegt.

14. Verfahren nach einem der Ansprüche 10 oder 12 bis 13,
**dadurch gekennzeichnet,**
**daß** die spezifische Belastung auf Zug/Druck innerhalb eines Einzelelementes aus flexibel gewalztem Blech innerhalb einer Verteilungsbreite von ± 20 % liegt.
